(19) **Europäisches Patentamt**
**European Patent Office**
**Office européen des brevets**

(11) **EP 3 337 922 B1**

(12) **EUROPEAN PATENT SPECIFICATION**

(45) Date of publication and mention
of the grant of the patent:
**29.07.2020 Bulletin 2020/31**

(51) Int Cl.:
*D04H 1/74* *(2006.01)*      *A01G 31/00* *(2018.01)*
*B32B 5/22* *(2006.01)*      *B32B 5/24* *(2006.01)*

(21) Application number: **16753662.2**

(86) International application number:
**PCT/EP2016/069605**

(22) Date of filing: **18.08.2016**

(87) International publication number:
**WO 2017/029358 (23.02.2017 Gazette 2017/08)**

(54) **COMPOSITE, GREENING SYSTEM AND DEVICE FOR THERMAL INSULATION**

VERBUNDSTOFF, BEGRÜNUNGSSYSTEM UND VORRICHTUNG ZUR WÄRMEDÄMMUNG

COMPOSITE, SYSTÈME DE VÉGÉTALISATION ET DISPOSITIF POUR L'ISOLATION THERMIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **19.08.2015 EP 15181507**

(43) Date of publication of application:
**27.06.2018 Bulletin 2018/26**

(73) Proprietor: **XF Technologies B.V.**
**6827 AV Arnhem (NL)**

(72) Inventors:
• **LASAK, Krzysztof**
**27243 Dünsen (DE)**
• **BÖTTCHER, Rolf-Dieter**
**47533 Kleve (DE)**

(74) Representative: **CPW GmbH**
**Kasinostraße 19-21**
**42103 Wuppertal (DE)**

(56) References cited:
**EP-A1- 0 280 338      EP-A1- 1 364 773
WO-A1-96/02127      WO-A1-97/32069
WO-A1-2008/000889**

**Description**

The present invention pertains to a composite to retain water, a greening system, a system for thermal insulation, and a multifunctional device for greening and/or thermal insulation and/or acoustic insulation.

Materials to retain water have to fulfill their function under changing weather conditions. Said materials tend to fail not only in long-lasting dry periods, because water evaporates from the material, but also in periods of intensive rain, because the system cannot store the offered quantity of water.

The document EP 0 280 338 A1 describes a method for manufacturing a coherent water absorbing porous product. To manufacture said product a mineral smelt which has been fiberized in an air flow and carried thereby on a conveyor forms a primary membrane 3 of water absorbing mineral fibers applied with a binder, and, so that the mineral fibers can be made moist with water, also with a wetting agent. Then, a material 5 is applied over the whole width of primary membrane 3. Material 5 has a greater water retaining capacity than a matrix 6 which is formed from the mineral fibers which can be moistened and which form the primary membrane 3. Material 5 preferably consists of water adsorbing mineral fibers, but, alternatively, may consist of a plastic, more particularly a foam plastic, and suitable inorganic materials. Using sandwich conveyors, which perform a sideways reciprocating movement relative to the conveyor 7 located downstream, the primary membrane 3 provided with material 5 is laid off in folded state onto conveyor 7. The resulting folded structure is called secondary membrane 9. Secondary membrane 9 is compressed to the required thickness and guided in said compressed state in a curing oven, wherein the binding agent is cured resulting in the coherent water absorbing porous product. The manufacture of said product is rather laborious because of the numerous and complicated process steps, and because of the at least four components which are necessary, namely water absorbing mineral fibers, a binder, a wetting agent, and further mineral fibers.

Therefore, the problem of the present invention is to provide a material to retain water, which is easily composed, and which can be easily manufactured, and, nevertheless, is capable to retain water for a long time.

This problem is solved by a composite as defined in claim 1, said composite comprising a first fabric layer having a water permeability $W_1$ and adjacent, preferably adhered to a second fabric layer having a water permeability $W_2$, wherein $W_2$ and $W_1$ fulfill the relation $W_2 < W_1$, and wherein the composite is folded to exhibit a folded structure, wherein the folded structure comprises a plurality of folds, wherein preferably the folds exhibit a meandering fold shape.

Surprisingly, the composite according to the present invention exhibits a long-lasting water retaining capability, which in preferred embodiments may be about 65 hours without any artificial watering, if the composite has been watered on the front side at its upper fold. Furthermore, if the composite according to the present invention has been completely soaked with water, the composite exhibits a high water storage capacity expressed as liter of water per square meter of folded composite [$l/m^2$], which ranges from 8 to 60 $l/m^2$, wherein $m^2$ means the front surface area. And, if the composite according to the present invention has been completely soaked with water, the composite exhibits a high residual water content $w_r$ expressed as percent of water in the composite after a certain time without any watering with respect to the initial water content $w_i$ of the composite after complete water soaking. In preferred embodiments said residual water content $w_r$ amounts for example from about 83 to 86 % after 1 day and for example from 31 to 53 % after 7 days, and it takes for example more than 16 to 24 days till $w_r$ of the composite according to the present invention drops below 2 %.

Said surprising results were achieved, though the composite according to the present invention comprises merely two components, namely a first fabric layer having a water permeability $W_1$ which is adjacent, preferably adhered to a second fabric layer having a water permeability $W_2 < W_1$.

In the present invention the water permeability W is measured according to EN ISO 11058.

In preferred embodiments of the composite according to the present invention the water permeability $W_1$ of the first fabric layer ranges from 50 to 200 $l/(s\cdot m^2)$, even more preferred from 80 to 150 $l/(s\cdot m^2)$.

According to the present invention the water permeability $W_2$ of the second fabric layer ranges from 1 to 20 $l/(s\cdot m^2)$, even more preferred from 1 to 5 $l/(s\cdot m^2)$.

A difference $W_2-W_1$ of the water permeability $W_2$ of the second fabric layer and the water permeability $W_1$ of the first fabric layer ranges preferably from 30 to 150 $l/s\cdot m^2$, even more preferred from 100 to 150 $l/(s\cdot m^2)$.

A ratio $W_2/W_1$ of the water permeability $W_2$ of the second fabric layer to the water permeability $W_1$ of the first fabric layer ranges preferably from 0.01 to 0.4, even more preferred from 0.01 to 0.1.

A further advantage of the composite according to the present invention is the fact that cheap materials can be used both for the first fabric layer having a water permeability $W_1$ and for the second fabric layer having a water permeability $W_2$. For example, the first fabric layer having a water permeability $W_1$ can be manufactured from a nonwoven material, preferably from a recycled nonwoven material.

Furthermore, the composite of the present invention can be manufactured easily, because simple techniques can be applied to position the first fabric layer adjacent to the second fabric layer, preferably to adhere said components to one another, like for example gluing in stripes, and simple folding techniques can be applied to fold the composite into a folded structure comprising a plurality of folds, wherein the folds preferably exhibit a meandering fold shape. For example, the composite may be perforated at uniform distances near one edge of the glued composite stripe and at the same uniform distances near the other edge of the glued composite stripe, bars may be inserted into said perforations, and the composite may be pushed together with a folding pressure which is sufficiently high to obtain a folded structure, which contains a plurality of folds, and wherein preferably adjacent folds contact one another.

The composite according to the present invention may be used without any further means. For example the composite may be directly installed on a house wall or on a roof. However, it is preferred that the composite according to the present invention is fixed in a corpus or in a box, for example with the aid of the bars mentioned above to get a strong and durable fold shape. The material of the corpus or box may be wood, metal or plastic. The front side of the corpus or of the box is in any case open, so that the front side of the composite is completely accessible for being rained. The rear side of the corpus or of the box may be open, so that the composite according to the present invention may be installed in direct contact of its rear surface with a house wall or with a roof. Alternatively, the rear side of the corpus or of the box may be closed. The sides of the corpus or of the box on the left and on the right edge of the composite may be open, but are preferably closed.

If the composite according to the present invention is installed vertically, i.e. parallel to the field lines of gravity, for example at a house wall, due to the lower water permeability $W_2$ of the second fabric layer which is adjacent, preferably adhered to the first fabric layer with higher water permeability $W_1$ water on top of the composite or anywhere else above the bottom of the composite is hindered to flow directly to the bottom of the composite. So, the second fabric layer acts to hinder the direct vertical flow of water. Rather, the water is forced to meander essentially along the first fabric layer, and said meandering movement of water is the slower the more the angle at which a segment of a fold runs relative to the field lines of gravity approaches 90°. Consequently, the first fabric layer acts as a storage medium for water so that it takes a long time till the flowing, preferably meandering water has completely left the bottom of the composite. The second fabric layer retains a water surplus in the those parts of the folds which extend more or less parallel to the ground, and, therefore, extend more or less perpendicular to field lines of the gravity. Correspondingly the same applies, if the composite according to the present invention is installed at an angle $0° < \alpha < 90°$ relative to the field lines of gravity, for example on an inclined roof.

In a preferred embodiment of the composite according to the present invention the composite comprises a third fabric layer adjacent, preferably adhered to the first fabric layer, wherein the third fabric layer has a water permeability $W_3$, wherein in any case $W_3$ fulfills the relation $W_3 < W_1$, and wherein $W_3$ either fulfills the relation $W_3 = W_2$ or the relation $W_3 \neq W_2$. Preferably, the second fabric layer adheres to one of the surfaces of the first fabric layer, and the third fabric layer adheres to the respective other one surface. For example, the third fabric layer adheres to the top surface of the first fabric layer, and the second fabric layer adheres to the bottom surface of the first fabric layer. In another preferred example the third fabric layer adheres to the bottom surface of the first fabric layer, and the second fabric layer adheres to the top surface of the first fabric layer.

In a further preferred embodiment of the composite according to the present invention the first fabric layer is a nonwoven, water-permeable fabric, and the second fabric layer is a fabric of woven tapes or a knitted fabric or a warp-knitted fabric.

In a further preferred embodiment of the composite according to the present invention the third fabric layer is a fabric of woven tapes or a nearly watertight membrane or foil or a watertight membrane or foil. The term "watertight membrane or foil" means that said membrane or foil has a water permeability $W_3$ measured according to EN ISO 1108 which is zero. The term "nearly watertight membrane or foil" means that said membrane or foil has a water permeability $W_3$ measured according to EN ISO 11058 which is very low but higher than zero, i.e. $W_3$ preferably ranges from $1 \cdot 10^{-4}$ to $1 \cdot 10^{-7}$ l/(s·m²), more preferably from $1 \cdot 10^{-6}$ to $1 \cdot 10^{-7}$ l/(s·m²). The nearly watertight membrane or foil may as such be nearly watertight. The term "as such nearly watertight membrane or foil" means that the membrane or foil forming material after having been manufactured into said membrane or foil is nearly watertight.

However, it is also possible that the nearly watertight membrane or foil, which may form the optionally present third fabric layer of the composite according to the present invention is either perforated as such or became perforated during the process of manufacturing the three-layered composite, for example, during connecting the first fabric layer which may be a nonwoven with the as such nearly watertight membrane or foil and optionally with the second fabric layer.

Furthermore, it is possible that the membrane or foil which may form the optionally present third fabric layer of the composite according to the present invention is watertight, i.e., that its water permeability $W_3$ measured according to EN ISO 11058 is zero, and that said watertight membrane or foil became perforated during the process of manufacturing the three-layered composite, for example, during connecting the first fabric layer which may be a nonwoven with the watertight membrane or foil and optionally with the second fabric layer.

Preferably, the folds exhibits a meandering fold shape in the composite according to the present invention, wherein the meandering fold shape of a single fold is defined by

- a hinge 1 which defines a point at which a radius of curvature of the fold reaches its minimum value $r_{min}$, wherein the hinge 1 is flanked by

- a first limb 2 which exhibits radii of curvature $r_{first\ limb} > r_{min}$, wherein the first limb 2 extends from the hinge 1 to a first inflection point 3 which exhibits zero curvature, and wherein the first inflection point 3 is followed by a first line 4 having radii of curvature $r_{first} > r_{first\ limb}$, and
- a second limb 2' which exhibits radii of curvature $r_{second\ limb} > r_{min}$, wherein the second limb 2' extends from the hinge 1 to a second inflection point 3' which exhibits zero curvature, and wherein the second inflection point 3' is followed by a second line 4' having radii of Curvature $r_{second\ line} > r_{second\ limb}$.

Within the preferred embodiment described above, it is preferred that the first inflection point 3 is followed by a first line 4 of approximately zero curvature, especially preferred of zero curvature, and the second inflection point 3' is followed by a second line 4' of approximately zero curvature, especially preferred of zero curvature.

Within the preferred embodiment described above, it is preferred that the first line 4 of approximately zero curvature, or of zero curvature, runs nearly parallel, especially preferred parallel, to the second line 4' of approximately zero curvature, especially preferred of zero curvature.

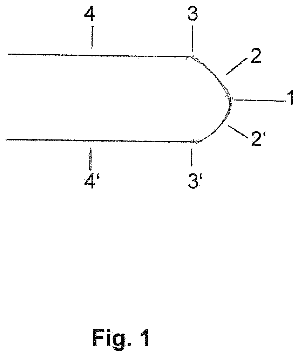

Fig. 1 schematically shows a single fold as described immediately above: Said single fold exhibits a hinge 1 which defines a point at which a radius of curvature of the fold reaches its minimum value $r_{min}$. The hinge 1 is flanked by a first limb 2 which extends from the hinge 1 to a first inflection point 3 which exhibits zero curvature. The first infection point 3 is followed by a first line 4 of zero curvature. Furthermore, the hinge 1 is flanked by a second limb 2' which extends from the hinge 1 to a second inflection point 3' which exhibits zero curvature. The second infection point 3' is followed by a second line 4' of zero curvature, and the first line 4 of zero curvature runs parallel to the second line 4' of zero curvature.

In a further preferred embodiment of the composite according to the present invention the first line 4 exhibits a length $L_4$ and the second line 4' exhibits a length $L_{4'}$, and $L_4$ differs from $L_{4'}$ at most by 20 %, more preferred at most by 5 % or, most preferable, $L_{4'}$ equals $L_4$.

In the meandering fold shape of the composite according to the present invention neighbored folds are preferably not connected with one another. In this preferred embodiment of the composite the preferably meandering fold shape allows a direct planting between the folds. However, it is preferred that adjacent folds contact one another. This contact between adjacent folds can be reached, if during the folding operation which is described in the examples in more detail, a folding pressure is applied which is sufficiently high to result in adjacent folds which contact one another. If adjacent folds contact one another, water which is present in a lower fold is capillary pumped into the contacting upper fold with the aid of the capillary effect generated by capillaries in the first fabric layer and/or in the second fabric layer. Said capillary pumping of water from a lower fold into the contacting upper fold effects that the time during which water is available for the plants which may be implanted between the folds is further extended. And said capillary pumping of water from a lower fold into the contacting upper fold is also advantageous for applications of the composite according to the present invention wherein no plants are present between the folds, like in the later described application of thermal insulation, because the extended presence of water in the composite extends the time during which the composite can thermally insulate a wall or an inclined roof at which the composite is installed from the thermal conditions on the outer side of the wall or roof, respectively.

In any embodiment of the composite according to the present invention the first and second fabric layers exist as individual layers, wherein the first fabric layer has a water permeability $W_1$ which is higher than the water permeability $W_2$ of the second fabric layer.

Within the scope of the present invention the term "nonwoven fabric" is defined in accordance with DIN EN ISO 9092:2011. Therein, nonwoven fabrics are defined to represent structures of textile materials, like fiber structures, endless filaments or staple fiber yarns, independent from their properties or origin, which have been formed into a fabric by whatever process, and, thereafter, have been bonded by any method, except by braiding of yarns, like in a woven fabric, knotted fabric, knitted fabric, lace or tufted fabric.

In the composite according to the present invention the water permeability $W_1$ of the first fabric layer, which preferably is a nonwoven, water-permeable fabric is preferably at least 2-fold higher, more preferred at least 10-fold higher and most preferred at least 100-fold higher than the water permeability $W_2$ of the second fabric layer, which preferably is a fabric of woven tapes.

Preferably, the nonwoven, water-permeable fabric comprised by the composite according to the present invention is made of fibers of synthetic polymers, like polypropylene (PP), polyethylene (PE), polyester (PES), polyamide (PA), polylactic acid (PLA), or mixtures of at least two of said polymers. Preferably, the fibers of synthetic polymers have a titer in the range from 15 to 1 dtex, more preferred from 10 to 3 dtex, and most preferred around 5 dtex.

Furthermore, the nonwoven, water-permeable fabric comprised by the composite according to the present invention can be made

- of fibers of natural inorganic origin, like mineral fibers, for example mineral wool, also known as rock wool, and manufactured from heated dolomite, i.e., from heated $CaMg(CO_3)_2$, or

- of fibers of natural organic origin derived from hemp, sheep wool, coconut, and cotton, or of mixtures of mineral fibers and one or more of said organic fibers.

Preferably, the nonwoven, water-permeable fabric comprised by the composite according to the present invention is made of less than 95 to more than 70 wt.% of optionally mixed fibers of synthetic origin and more than 5 to more than 30 wt.% of cotton fibers, more preferred of approximately 70 wt.% of optionally mixed fibers of synthetic polymers listed above and approximately 30 wt.% of cotton fibers.

Especially preferred, the nonwoven, water-permeable fabric comprised by the composite according to the present invention is made of 70 wt.% of optionally mixed fibers of synthetic polymers listed above and 30 wt.% of cotton fibers.

It is even possible that in the nonwoven, water-permeable fabric comprised by the composite according to the present invention substrates of organic and/or mineral origin are embedded between the above mentioned fibers of synthetic polymers, or between the above mentioned fibers of natural origin. Said substrates serve to hold plant nutrients and water in the system for an extended time, as required. And said substrates serve as a filler (root zone) for higher plant varieties.

Preferred substrates of organic origin are a mixture of peat and clay (in German "Einheitserden"), pure peat and other peat-mixtures. Other combinations of organic wastes, like for example waste wood, banks, mulch, and straw, are also possible. Preferred substrates of mineral origin are volcanic rock (lava) in different shape, and recycled ceramic wastes, like crushed engineering bricks.

Especially, if the composite according to the present invention shall be installed in semi-arid and arid zones, it is recommended to combine the substrates listed above with industrially produced earths, like for example expanded clay (lecaton) or perlite (vermiculite), as well as with a super absorber, like for example a hydrogel, or with a polyurethane foam.

Preferably, the first fabric layer, e.g. the nonwoven, water-permeable fabric comprised by the composite according to the present invention has an areal density in the range of 100 to 2000 $g/m^2$, especially preferred in the range of 500 to 1200 $g/m^2$, and especially preferred from 600 to 800 $g/m^2$.

Preferably, the second fabric layer, e.g. the fabric of woven tapes and/or of the third fabric layer optionally comprised by the composite according to the present invention comprises tapes made of polypropylene (PP), polyethylene (PE), polyester (PES), polyamide (PA) or mixtures of at least two of said polymers.

Preferably, the second fabric layer, e.g. the fabric of woven tapes and/or the third fabric layer optionally comprised by the composite according to the present invention has an areal density in the range of 50 to 300 $g/m^2$, especially preferred in the range of 100 to 200 $g/m^2$.

Preferably, the first fabric layer, e.g. the nonwoven water-permeable fabric, is adhered to the second fabric layer, e.g. to the fabric of woven tapes, preferably by gluing in stripes. If the third layer is present in the composite, the first fabric layer, e.g., the nonwoven water-permeable fabric, may also be glued in stripes with the third layer.

As already mentioned, the second fabric layer, e.g. the fabric of woven tapes, retains a water surplus in the those parts of the folds which extend more or less parallel to the ground, and, therefore, extend more or less perpendicular to the field lines of the gravity so that the retained water remains available for a planting of the composite. Simultaneously, the second fabric layer, e.g. the fabric of woven tapes ensures a certain permeability for air and water (drainage). Therefore, a greening system comprising such a composite is also part of the present invention. For said purpose, the composite according to the present invention is provided with a soil suitable for growing the desired plants. Said soil may be applied between the folds of the folded structure. The greening system according to the present invention can advantageously be used for indoor and outdoor applications, e.g. for greening a wall of a building, or for roof greening on steep roofs and on flat roofs.

The composite according to the present invention can also be applied outside the field of greening systems. This is, because the water contained in the composite according to the present invention evaporates, and thereby consumes thermal energy so that a cooling effect occurs which cools and thereby thermally insolates the wall of a building or the inclined roof at which it is installed from the thermal conditions on the outer side of the wall or roof, respectively. Independent from the just described cooling effect, the water contained in the composite according to the present invention constitutes a barrier for thermal radiation and thereby hinders or at least retards the transport of heat, especially in combination with additional thermally insolating materials, like mineral wool or polystyrene (Styropor). Therefore, a device for thermal insulation comprising a composite according to the present invention is also part of this invention.

Furthermore, the fold shape of the composite according to the present invention constitutes a diffusor for acoustic waves. The diffusor hinders or at least attenuates the transport of acoustic waves through the composite, especially in combination with additional sound-absorbing materials, like foam or mineral wool. This effect can advantageously be used both for indoor and outdoor applications, like indoor and outdoor partitions, and in noise protection walls. Therefore, a device for acoustic noise insulation comprising a composite according to the present invention is part of this invention, as well.

A skilled person who knows the present invention can easily provide a device that combines the effects of greening, thermal insulation, and acoustic noise insulation. Therefore, a multifunctional device for greening and/or thermal insulation and/or acoustic noise insulation comprising a composite according to the present invention is also part of the present invention.

The composite according to the present invention can be realized in a modular setup: The composite is preferably fixed permanently in the already mentioned corpus or box or on a pre-manufactured mounting frame, for example on a three-dimensional mounting frame, preferably with the aid of special catching clips. The mounting frame bearing the permanently-fixed composite can be installed in a simple manner for example

- on a front of a building, and/or
- on a roof of a building, e.g. on a roof having a slope of 35° or more without additional water storage materials, like water-storing felts or an additional layer of substrate, which are needed in conventional greening systems to ensure that the greening system exhibits a sufficient tare weight, and, therefore, is neither blown away nor flushed away during extreme weather situations. A further advantage of permanently fixing the composite according to the present invention on a pre-manufactured mounting frame is that shrinkage of the composite during complete drying-out is limited.

Generalized, the composite according to the present invention comprises a first material layer having a water permeability $W_1$, wherein said first material layer is adjacent, preferably adhered

- to a second material layer having a water permeability $W_2$, and optionally
- to a third material layer $W_3$ having a water permeability $W_3$,
  wherein
  $W_2$ and $W_1$ fulfill the relation $W_2 < W_1$,
  $W_3$ fulfills the relations $W_3 < W_1$, and $W_3 = W_2$ or $W_3 \# W_2$,
  and wherein the composite is folded to exhibit a folded structure, wherein the folded structure comprises a plurality of folds, wherein the folds exhibit a meandering fold shape.

In a preferred embodiment the first material layer of said generalized composite is a first fabric layer.

In a further preferred embodiment the second material layer of said generalized composite is a second fabric layer.

In a further preferred embodiment the third material layer of said generalized composite is a third fabric layer.

In further preferred embodiments of said generalized composite the same applies for the first, second, and third material layer as already explained for the non-generalized composite of the present invention.

Furthermore, materials other than fabric layers may serve for the first, second, and, if present, for the third material layer, provided that their water permeabilities $W_1$, $W_2$, and $W_3$ fulfill the relations required in the generalized composite. For example, a film or a perforated film may serve as the second material layer, if the water permeability $W_2$ of said film or perforated film is lower than the water permeability $W_1$ of the first material layer. Furthermore, a film or a perforated film may serve as the third material layer, if the water permeability $W_3$ of said film or perforated film is

- lower than the water permeability $W_1$ of the first material layer, and
- either equal to or different from the water permeability $W_2$ of the second material layer.

In the following examples the composite according to the present is described in more detail.

**Example 1**

A reinforced nonwoven, water-permeable fabric ("XF 154 Wasserspeicher Recycling-Vlies" obtainable from Bonar Xeroflor GmbH, Groß Ippener, DE, consisting of approx. 70 wt.% mixed recycled synthetic fibers made of synthetic polymers and approx. 30 wt.% cotton) having an areal density of 800 g/m$^2$ was adhered to a fabric of woven tapes ("PPX" obtainable from Bonar Xeroflor GmbH, Groß Ippener, DE, consisting of woven tapes of polypropylene) having an areal density of 130 g/m$^2$ by gluing in stripes.

The resulting composite was folded into a folded structure by the following method: Two rods of zinc-coated steel were fixed in a wood arbor. The composite was perforated at uniform distances. Said rods of zinc-coated steel were inserted in said uniform perforations of the composite, and the composite was pushed together with a folding pressure which is sufficiently high to obtain a folded structure which exhibits a plurality of folds wherein adjacent folds contact one another. The folded structure had a height of 1400 mm, a width of 800 mm and a thickness of 50 mm. Each folded structure exhibits a hinge 1 which defines a point at which a radius of curvature of the fold reaches its minimum value $r_{min}$. The hinge 1 is flanked by a first limb 2 which extends from the hinge 1 to a first inflection point 3 which exhibits zero curvature. The first inflection point 3 is followed by a first line 4 of zero curvature. Furthermore, the hinge 1 is flanked by a second limb 2' which extends from the hinge 1 to a second inflection point 3' which exhibits zero curvature. The second inflection point 3' is followed by a second line 4' of zero curvature, and the first line 4 of zero curvature runs parallel to the second line 4' of zero curvature. Both the length of the first line 4 and the length the second line 4' is about 5 cm. The weight ratio of nonwoven, water-permeable fabric to fabric of woven tapes in the folded composite amounts to about 6:1.

The folded composite was installed vertically by placing the composite on the wood arbor, and was watered with the watering system MICRO DRIP from GARDENA on its front surface. The watering system contained 6 watering nozzles having a distance of 15 cm. The nozzles contacted the most upper fold of the composite. A water flow through the nozzles of maximally 1.5 liter per hour was provided at a working pressure of 2 bar. The folded composite was soaked with water along its whole front surface area, i.e., along its surface facing the watering system after about 7 hours. This result was obtained after the first time when the composite was brought into service. On the rear side of the folded composite no water was noticeable. The water was distributed exclusively along the meandering folds.

After about 65 hours at an air temperature of 14 °C and at a relative humidity of about 35 to 40 % without any watering of the folded composite water was still noticeable by hand between the folds in the upper region of the composite at the front side of the folded composite. The amount of said water was sufficient to allow the growth of plants. In the lower region of the composite about 10 cm above the wood arbor humidity was clearly noticeable, i.e. in said lower region the composite was wet all over.

## Example 2

A reinforced nonwoven, water-permeable fabric ("XF 154 R Wasserspeicher Recycling-Vlies" obtainable from Bonar Xeroflor GmbH, Groß Ippener, DE, consisting of approx. 70 wt.% mixed recycled synthetic fibers made of synthetic polymers and approx. 30 wt.% cotton) having an areal density of 800 g/m$^2$ was adhered to a fabric of woven tapes (Type "SG 20/20" obtainable from Bonar Xeroflor GmbH, Groß Ippener, DE, consisting of woven tapes of polypropylene) having an areal density of 84 g/m$^2$ by gluing in stripes.

The resulting composite was folded into a folded structure by the following method: Two rods of zinc-coated steel were fixed in a wood arbor. The composite was perforated at uniform distances. Said rods of zinc-coated steel were inserted in said uniform perforations of the composite, and the composite was pushed together with a folding pressure which is sufficiently high to obtain a folded structure which exhibits a plurality of folds wherein adjacent folds contact one another. The unfolded structure had a length of 4000 mm. The folded structure had a height of 500 mm, a width of 500 mm and a thickness of 50 mm. Each folded structure exhibits a hinge 1 which defines a point at which a radius of curvature of the fold reaches its minimum value $r_{min}$. The hinge 1 is flanked by a first limb 2 which extends from the hinge 1 to a first inflection point 3 which exhibits zero curvature. The first inflection point 3 is followed by a first line 4 of zero curvature. Furthermore, the hinge 1 is flanked by a second limb 2' which extends from the hinge 1 to a second inflection point 3' which exhibits zero curvature. The second inflection point 3' is followed by a second line 4' of zero curvature, and the first line 4 of zero curvature runs parallel to the second line 4' of zero curvature. Both the length of the first line 4 and the length the second line 4' is about 5 cm. The weight ratio of nonwoven, water-permeable fabric to fabric of woven tapes in the folded composite amounts to about 10:1.

The geometrical area of the surface of the folded structure was 2 m$^2$ (4000 mm length · 500 mm width).

## Determination of the residual water content

The determination was performed indoor at a temperature of about 20 °C and at a relative humidity of about 35 %.

The folded structure was dipped for 24 h in a water bath so that the water level of the bath was above the highest felt of the structure. Thereafter, the water-soaked folded structure was taken out of the water bath and placed vertically for dripping. After 2 h the initial weight $w_i$ of the water in the folded structure was determined in [kg]. After certain time intervals the weight $w_t$ in the folded structure was determined in [kg] till $w_t$ dropped below 0.1 kg and till $w_r$ dropped below 2 %. The residual water content $w_r$ after a time t was calculated in % by equation (1)

$$w_r = (w_t / w_i) \cdot 100 \ [\%] \qquad (1).$$

The results are shown in table 1.

### Example 3

Example 3 was performed as example 2 with the only difference that the folded structure consisted of a nonwoven, water-permeable fabric (Type "XF 159" obtainable from Neaustima and consisting of approx. 70 wt.% mixed recycled synthetic fibers made of synthetic fibers and approx. 30 wt.% cotton) having an areal density of 1200 g/m$^2$. The results are shown in table 1.

### Example 4

Example 4 was performed as example 2 with the only difference that the folded structure consisted of a nonwoven, water-permeable fabric (Type "XF 163" obtainable from Neaustima and consisting of approx. 70 wt.% mixed recycled synthetic fibers made of synthetic fibers and approx. 30 wt.% cotton) having an areal density of 600 g/m$^2$. The results are shown in table 1.

Table 1 shows that after 1 day the residual water content $w_r$ of the folded structures of in the composites of examples 2, 3, and 4 are above 80 %. After 7 days $w_r$ is 31 % in the composite of example 2, 53 % in the composite of example 3 and 40 % in the composite of example 4. After 14 days $w_r$ is 5 % in the composite of example 2, 27 % in the composite of example 3 and 15 % in the composite of example 4. It takes more than 16 days in the composite of example 2, more than 24 days in the composite of example 3, and more than 22 days in the composite of example 4 till $w_r$ drops below 2 %.

**Table 1**

| time | Example 2 | Example 3 | Example 4 |
|---|---|---|---|
| 2 h | $w_i$ [kg] = 4.55; | $w_i$ [kg] = 5.65; | $w_i$ [kg] = 5.1; |
| | $w_r$ [%] | $w_r$ [%] | $w_r$ [%] |
| 1 day | 86 | 84 | 83 |
| 2 days | 70 | 79 | 71 |
| 3 days | 58 | 69 | 63 |
| 4 days | 49 | 65 | 58 |
| 5 days | 43 | 61 | 52 |
| 6 days | 36 | 57 | 46 |
| 7 day | 31 | 53 | 40 |
| 8 days | 26 | 49 | 35 |
| 9 days | 23 | 45 | 31 |
| 10 days | 20 | 43 | 27 |
| 11 days | 16 | 37 | 25 |
| 12 days | 12 | 34 | 21 |
| 13 days | 9 | 30 | 18 |
| 14 days | 5 | 27 | 15 |
| 15 days | 4 | 23 | 12 |
| 16 days | 2 | 20 | 9 |
| 17 days | - | 18 | 8 |
| 18 days | - | 15 | 6 |
| 19 days | - | 12 | 5 |
| 20 days | - | 10 | 4 |
| 21 days | - | 7 | 3 |
| 22 days | - | 4 | 2 |

(continued)

| time | Example 2 | Example 3 | Example 4 |
|---|---|---|---|
| 2 h | $w_i$ [kg] = 4.55; | $w_i$ [kg] = 5.65; | $w_i$ [kg] = 5.1; |
| | $w_r$ [%] | $w_r$ [%] | $w_r$ [%] |
| 23 days | - | 3 | - |
| 24 days | - | 2 | - |

**Claims**

1. A composite comprising a first fabric layer having a water permeability $W_1$ and adjacent to a second fabric layer having a water permeability $W_2$, wherein $W_2$ and $W_1$ fulfill the relation $W_2 < W_1$, and wherein the composite is folded to exhibit a folded structure, wherein the folded structure comprises a plurality of folds, **characterized in that** the water permeability $W_2$ of the second fabric ranges from 1 to 20 l/(s·m²), as measured according to EN ISO 11058, and the composite has a water storage capacity,
   wherein the water storage capacity ranges from 8 to 60 l/m².

2. The composite according to claim 1, wherein the composite comprises a third fabric layer adjacent to the first fabric layer, wherein the third fabric layer has a water permeability $W_3$, wherein in any case $W_3$ fulfills the relation $W_3 < W_1$, and wherein $W_3$ either fulfills the relation $W_3 = W_2$ or the relation $W_3 \neq W_2$.

3. The composite according to claim 1 or 2, wherein the first fabric layer is a nonwoven, water-permeable fabric, and the second fabric layer is a fabric of woven tapes or a knitted fabric or a warp-knitted fabric.

4. The composite according to claim 2 or 3, wherein the third fabric layer is a fabric of woven tapes or a membrane or foil having a water permeability $W_3$, wherein $W_3$ either is 0 or ranges from $1 \cdot 10^{-4}$ to $1 \cdot 10^{-7}$ l/(s·m²).

5. The composite according to one or more of claims 1 to 4, wherein the folds exhibit a meandering fold shape, and wherein the meandering fold shape of a single fold is defined by

   - a hinge (1) which defines a point at which a radius of curvature of the fold reaches its minimum value $r_{min}$, wherein the hinge (1) is flanked by

     - a first limb (2) which exhibits radii of curvature $r_{first\ limb} > r_{min}$, wherein the first limb (2) extends from the hinge (1) to a first inflection point (3) which exhibits zero curvature, and wherein the first inflection point (3) is followed by a first line (4) having radii of curvature $r_{first\ line} > r_{first\ limb}$, and
     - a second limb (2') which exhibits radii of curvature $r_{second\ limb} > r_{min}$, wherein the second limb (2') extends from the hinge (1) to a second inflection point (3') which exhibits zero curvature, and wherein the second inflection point (3') is followed by a second line (4') having radii of curvature $r_{second\ line} > r_{second\ limb}$.

6. The composite according to one or more of claims 1 to 5, wherein the first line (4) exhibits a length $L_4$ and the second line (4') exhibits a length $L_{4'}$, and $L_4$ differs from $L_{4'}$ at most by 20 % .

7. The composite according to one or more of claims 1 to 6, wherein the water permeability $W_1$ of the first fabric layer is at least 2-fold higher than the water permeability $W_2$ of the second fabric layer.

8. The composite according to one or more of claims 3 to 7, wherein the nonwoven, water-permeable fabric is made of 70 wt.% fibers of synthetic polymers and 30 wt.% of cotton fibers.

9. The composite according to one or more of claims 3 to 8, wherein the nonwoven, water-permeable fabric has an areal density in the range of 100 to 2000 g/m².

10. The composite according to one or more of claims 3 to 9, wherein the fabric of woven tapes comprises tapes made of polypropylene (PP), polyethylene (PE), polyester (PES), polyamide (PA), or mixtures of at least two of said polymers.

**11.** The composite according to one or more of claims 3 to 10, wherein the nonwoven water-permeable fabric is adhered to the fabric of woven tapes, preferably by gluing in strips.

**12.** A greening system comprising a composite according to one or more of claims 1 to 11.

**13.** A device for thermal insulation comprising a composite according to one or more of claims 1 to 11.

**14.** A device for acoustic noise insulation comprising a composite according to one or more of claims 1 to 11.

**15.** A multifunctional device for greening and/or thermal insulation and/or acoustic noise insulation comprising a composite according to one or more of claims 1 to 11.


**Patentansprüche**

**1.** Verbundstoff, umfassend eine erste Stoffschicht, die eine Wasserdurchlässigkeit $W_1$ aufweist und an eine zweite Stoffschichtangrenzt, die eine Wasserdurchlässigkeit $W_2$ aufweist, wobei $W_2$ und $W_1$ die Beziehung $W_2 < W_1$ erfüllen, und wobei der Verbundstoff gefaltet ist, um eine gefaltete Struktur auf zu weisen, wobei die gefaltete Struktur eine Vielzahl von Falten umfasst, **dadurch gekennzeichnet, dass** die Wasserdurchlässigkeit W2 des zweiten Gewebes im Bereich von 1 bis 20 l/(s-m$^2$) liegt, gemessen gemäß EN ISO 11058, und der Verbundstoff eine Wasserspeicherkapazität aufweist, wobei die Wasserspeicherkapazität im Bereich von 8 bis 60 l/m$^2$ liegt.

**2.** Verbundstoff nach Anspruch 1, wobei der Verbundwerkstoff eine dritte Stoffschichtumfasst, die an die erste Stoffschichtangrenzt, wobei die dritte Stoffschichteine Wasserdurchlässigkeit $W_3$ aufweist, wobei $W_3$ in jedem Fall die Beziehung $W_3 < W_1$ erfüllt, und wobei $W_3$ entweder die Beziehung $W_3 = W_2$ oder die Beziehung $W_3 \neq W_2$ erfüllt.

**3.** Verbundstoff nach Anspruch 1 oder 2, wobei die erste Stoffschicht ein wasserdurchlässiges Vliesstoff und die zweite Stoffschicht ein Gewebe aus gewebten Bändern oder ein Gewirke oder ein Kettengewirke ist.

**4.** Verbundwerkstoff nach Anspruch 2 oder 3, wobei die dritte Stoffschicht ein Gewebe aus gewebten Bändern oder eine Membran oder Folie mit einer Wasserdurchlässigkeit $W_3$ ist, wobei $W_3$ entweder 0 ist oder im Bereich von $1 \cdot 10^{-4}$ bis $1 \cdot 10^{-7}$ l/(s·m$^2$) liegt.

**5.** Verbundstoff nach einem oder mehreren der Ansprüche 1 bis 4, wobei die Falten eine mäanderförmige Faltenform besitzen und wobei die mäanderförmige Faltenform einer einzelnen Falte definiert wird durch

- ein Scharnier (1), das einen Punkt definiert, an dem ein Krümmungsradius der Falte seinen minimalen Wert $r_{min}$ erreicht, wobei das Scharnier (1) flankiert wird durch
- einen ersten Schenkel (2), der Krümmungsradien $r_{erster\ Schenkel} > r_{min}$ besitzt, wobei sich der erste Schenkel (2) von dem Gelenk (1) zu einem ersten Wendepunkt (3) erstreckt, der keine Krümmung besitzt, und wobei auf den ersten Wendepunkt (3) eine erste Linie (4) folgt, die Krümmungsradien $r_{erste\ Linie} > r_{erster\ Schenkel}$ aufweist, und
- einen zweiten Schenkel (2'), der Krümmungsradien $r_{zweiter\ Schenkel} > r_{min}$ besitzt, wobei sich der zweite Schenkel (2') von dem Gelenk (1) zu einem zweiten Wendepunkt (3') erstreckt, der keine Krümmung besitzt, und wobei auf den zweiten Wendepunkt (3') eine zweite Linie (4') folgt, die Krümmungsradien $r_{zweite\ Linie} > r_{zweiter\ Schenkel}$ aufweist.

**6.** Verbundstoff nach einem oder mehreren der Ansprüche 1 bis 5, wobei die erste Linie (4) eine Länge $L_4$ und die zweite Linie (4') eine Länge $L_{4'}$ besitzt und $L_4$ sich um höchstens 20% von $L_{4'}$ unterscheidet.

**7.** Verbundwerkstoff nach einem oder mehreren der Ansprüche 1 bis 6, wobei die Wasserdurchlässigkeit $W_1$ der ersten Stoffschicht mindestens 2-fach höher ist als die Wasserdurchlässigkeit $W_2$ der zweiten Stoffschicht.

**8.** Verbundstoff nach einem oder mehreren der Ansprüche 3 bis 7, wobei das wasserdurchlässige Vliesstoffaus 70 Gew.-% Fasern aus synthetischen Polymeren und 30 Gew.-% Baumwollfasern hergestellt ist.

**9.** Verbundstoff nach einem oder mehreren der Ansprüche 3 bis 8, wobei das wasserdurchlässige Vliesstoff eine Flächendichte im Bereich von 100 bis 2000 g/m$^2$ aufweist.

**10.** Verbundstoff nach einem oder mehreren der Ansprüche 3 bis 9, wobei das Gewebe aus gewebten Bändern Bänder aus Polypropylen (PP), Polyethylen (PE), Polyester (PES), Polyamid (PA) oder Mischungen aus mindestens zwei dieser Polymere umfasst.

**11.** Verbundstoff nach einem oder mehreren der Ansprüche 3 bis 10, wobei das wasserdurchlässige Vliesstoff mit dem Gewebe aus gewebten Bändern verklebt ist, bevorzugt durch Kleben in Streifen.

**12.** Begrünungssystem, umfassend einen Verbundstoff nach einem oder mehreren der Ansprüche 1 bis 11.

**13.** Vorrichtung zur Wärmedämmung, umfassend einen Verbundstoff nach einem oder mehreren der Ansprüche 1 bis 11.

**14.** Vorrichtung zur akustischen Schalldämmung, umfassend einen Verbundstoff nach einem oder mehreren der Ansprüche 1 bis 11.

**15.** Multifunktionelle Vorrichtung zur Begrünung und/oder Wärmedämmung und/oder akustischen Schalldämmung, umfassend einen Verbundstoff nach einem oder mehreren der Ansprüche 1 bis 11.

**Revendications**

**1.** Composite comprenant une première couche de tissu ayant une perméabilité à l'eau $W_1$ et adjacente à une deuxième couche de tissu ayant une perméabilité à l'eau $W_2$, dans lequel $W_2$ et $W_1$ satisfont la relation $W_2 < W_1$, et dans lequel le composite est plié pour présenter une structure pliée, dans lequel la structure pliée comprend une pluralité de plis, **caractérisé en ce que** la perméabilité à l'eau $W_2$ du deuxième tissu est dans la plage allant de 1 à 20 $l/(s \cdot m^2)$, telle que mesurée selon EN ISO 11058, et le composite a une capacité de stockage d'eau, dans lequel la capacité de stockage d'eau est dans la plage allant de 8 à 60 $l/m^2$.

**2.** Composite selon la revendication 1, dans lequel le composite comprend une troisième couche de tissu adjacente à la première couche de tissu, dans lequel la troisième couche de tissu a une perméabilité à l'eau $W_3$, dans lequel dans tous les cas $W_3$ satisfait la relation $W_3 < W_1$, et dans lequel $W_3$ satisfait la relation $W_3 = W_2$ ou la relation $W_3 \neq W_2$.

**3.** Composite selon la revendication 1 ou 2, dans lequel la première couche de tissu est un tissu non tissé perméable à l'eau, et la deuxième couche de tissu est un tissu de rubans tissés ou un tissu tricoté ou un tissu tricoté en chaîne.

**4.** Composite selon la revendication 2 ou 3, dans lequel la troisième couche de tissu est un tissu de rubans tissés ou une membrane ou une feuille ayant une perméabilité à l'eau $W_3$, dans lequel $W_3$ est 0 ou est dans la plage allant de $1 \cdot 10^{-4}$ à $1 \cdot 10^{-1}$ $l/(s \cdot m^2)$.

**5.** Composite selon une ou plusieurs des revendications 1 à 4, dans lequel les plis présentent une forme de pli sinueux, et dans lequel la forme de pli sinueux d'un pli unique est définie par

- une articulation (1) qui définit un point au niveau duquel un rayon de courbure du pli atteint sa valeur minimum $r_{min}$, dans lequel l'articulation (1) est flanquée par
- un premier membre (2) qui présente des rayons de courbure $r_{first\ limb} > r_{min}$, dans lequel le premier membre (2) s'étend à partir de l'articulation (1) vers un premier point d'inflexion (3) qui présente une courbure nulle, et dans lequel le premier point d'inflexion (3) est suivi d'une première ligne (4) ayant des rayons de courbure $r_{first\ line} > r_{first\ limb}$, et
- un second membre (2') qui présente des rayons de courbure $r_{second\ limb} > r_{min}$, dans lequel le second membre (2') s'étend à partir de l'articulation (1) vers un second point d'inflexion (3') qui présente une courbure nulle, et dans lequel le second point d'inflexion (3') est suivi d'une seconde ligne (4') ayant des rayons de courbure $r_{second\ line} > r_{second\ limb}$.

**6.** Composite selon une ou plusieurs des revendications 1 à 5, dans lequel la première ligne (4) présente une longueur $L_4$ et la seconde ligne (4') présente une longueur $L_{4'}$, et $L_4$ diffère de $L_{4'}$ d'au plus 20 %.

**7.** Composite selon une ou plusieurs des revendications 1 à 6, dans lequel la perméabilité à l'eau $W_1$ de la première couche de tissu est au moins 2 fois supérieure à la perméabilité à l'eau $W_2$ de la deuxième couche de tissu.

8. Composite selon une ou plusieurs des revendications 3 à 7, dans lequel le tissu non tissé perméable à l'eau est constitué de 70% en poids de fibres de polymères synthétiques et de 30 % en poids de fibres de coton.

9. Composite selon une ou plusieurs des revendications 3 à 8, dans lequel le tissu non tissé perméable à l'eau a une densité surfacique dans la plage allant de 100 à 2 000 g/m$^2$.

10. Composite selon une ou plusieurs des revendications 3 à 9, dans lequel le tissu de rubans tissés comprend des rubans réalisés en polypropylène (PP), polyéthylène (PE), polyester (PES), polyamide (PA), ou des mélanges d'au moins deux desdits polymères.

11. Composite selon une ou plusieurs des revendications 3 à 10, dans lequel le tissu non tissé perméable à l'eau est mis en adhérence sur le tissu de rubans tissés, de préférence par collage en bandes.

12. Système d'écologisation comprenant un composite selon une ou plusieurs des revendications 1 à 11.

13. Dispositif d'isolation thermique comprenant un composite selon une ou plusieurs des revendications 1 à 11.

14. Dispositif d'isolation acoustique comprenant un composite selon une ou plusieurs des revendications 1 à 11.

15. Dispositif multifonctionnel pour l'écologisation et/ou l'isolation thermique et/ou l'isolation acoustique comprenant un composite selon une ou plusieurs des revendications 1 à 11.

**Fig. 1**

**EP 3 337 922 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0280338 A1